# EUROPEAN PATENT APPLICATION

(11) **EP 0 984 359 A2**
(43) Date of publication of application: **08.03.2000**
(21) Application number: 99306018.5
(22) Date of filing: 29.07.1999
(51) Int. Cl.: G06F 9/50, H04L 29/06

(54) **Data processing apparatus, method and computer program product for describing resources for shared access thereto over a network**

(30) Priority: 28.08.1998 GB 9818705
(71) Applicant: International Business Machines Corporation, Armonk, NY 10504 (US)
(72) Inventor: Anthias, Taf, I.B.M. United Kingdom Ltd., I.P.L., Winchester, Hampshire S021 2JN (GB); Banks, Andrew David James, I.B.M. UK Ltd., I.P.L., Winchester, Hampshire S021 2JN (GB)
(74) Representative: Moss, Robert Douglas

(57) **Abstract**

A method of communicating amongst a plurality of data processing units via a network in such a way that one data processing unit can access a resource held on another data processing unit, has steps of: (a) a first data processing unit communicates over the network with a second data processing unit to offer a potential agreement as to a name which will be used to identify a resource; (b) the second data processing unit accepts the agreement to use the name to identify the resource; and (c) the first data processing unit communicates over the network with the second data processing unit using the name in order to carry out processing involving shared access to the resource.

## Description

The invention relates to the field of data processing, and more particularly to data processing amongst a group of data processing units which are connected together via a network.

When data processing units are connected to each other via a network it becomes possible for the data processing units to share resources which are contained solely within a single data processing unit. For example, one data processing unit (belonging to a retail store) can make a request to read an account balance that is maintained on another data processing unit (belonging to a bank with which the retail store does business).

With such sharing of resources, in order for a first data processing unit to be able to make a request for a resource maintained by a second data processing unit, the first data processing unit must know the name which the second data processing unit has assigned to the resource. If this were not true, the second data processing unit would not recognize the resource which the first data processing unit is requesting access to.

In the prior art, conventional schemes for naming resources in computer networks (such as the Domain Name Service (DNS) used by the Internet's World Wide Web) use a hierarchial technique, in which a central administrative authority allocates the names and delegates responsibility to certain data processing units for certain parts of the hierarchy. For example, in the DNS, resource names must be structured according to a predetermined format consisting of a number of words separated by periods (called "dots") (e.g., "word4.word3.word2.word1" might be a DNS name). The namespace is policed by a single central authority (e.g., a resource manager running on one data processing unit) and allocation of the next word on the left is delegated to a sub-authority (e.g., a resource manager running on another data processing unit). This sub-authority might further delegate allocation of the words on its left.

Accordingly, with the prior art, each resource manager must use names which fit the predefined format of the central authority. Further each resource manager may only allocate names in the portion of the predefined format that has been delegated to them (e.g., by the central authority). However, this severely limits present day organizations with respect to the way in which their resource managers handle the names of resources. The organizations thus lack autonomy with respect to the resource names they use. Instead, the possible names they can use and the format of such names is governed by the central authority taking away much freedom from the individual resource managers. Still further, such organizations are constrained in their ability to change their affiliations with other organizations. For instance, they may have difficulty in merging or separating from other organizations because of conflicts or restrictions in names they can use.

According to a first aspect, the present invention provides a first data processing apparatus in communication with a second data processing apparatus via a network such that the first data processing apparatus can access a resource held by the second data processing apparatus, the first data processing apparatus comprising: a resource; and resource manager; wherein the resource mnager agrees with a resource manager of the second data processing apparatus to use either (1) a first name for identifying the resource of the first data processing apparatus or (2) a second name for identifying the resource of the second data processing apparatus, and wherein the resource managers communicate with each other over the network in order to establish agreement that a particular name will be used as the first name or the second name in future correspondence to represent a particular resource.

Preferably, the network is the Internet. Preferably, the resource managers communicate with each other over the network in order to establish agreement as to a group of names which will be used in future correspondence to represent a group of resources.

According to a second aspect, the present invention provided a computer-based network of data processing units configured in such a way that one data processing unit can access a resource held on another data processing unit, the network comprising: a first data processing unit; and a second data processing unit; wherein the first data processing unit agrees with the second data processing unit to use either (1) a first name for identifying a resource of the first data processing unit or (2) a second name for identifying a resource of the second data processing unit, and wherein the first data processing unit communicates with the second data processing unit in order to establish agreement as to a particular name which will be used as the first name or the second name in future correspondence to represent a particular resource.

According to a third aspect, the present invention provides a method of communicating amongst a plurality of data processing units via a network in such a way that one data processing unit can access a resource held on another data processing unit, the method comprising steps of: (a) a first data processing unit communicates over the network with a second data processing unit to offer a potential agreement as to a name which will be used to identify a resource; (b) the second data processing unit accepts the agreement to use the name to identify the resource; and (c) the first data processing unit communicates over the network with the second data processing unit using the name in order to carry out processing involving shared access to the resource.

Preferably, the step (c) involves the first data processing unit making a request for access to the resource which is held on the second data processing unit, using the name of the resource which has been previously agreed upon in the steps (a) and (b).

Further preferably, the step (c) involves the second data processing unit making a request for access to the resource which is held by the first data processing unit, using the name of the resource which has been previously agreed upon in the steps (a) and (b).

According to a fourth aspect, the present invention provides a computer program product stored on a computer readable storage medium for, when executed on a computer, carrying out a method of communicating amongst a plurality of data processing units via a network in such a way that one data processing unit can access a resource held on another data processing unit, the method comprising steos of: (a) a first data processing unit communicates over the network with a second data processing unit to offer a potential agreement as to a name which will be used to identify a resource; (b) the second data processing unit accepts the agreement to use the name to identify the resource; and (c) the first data processing unit communicates over the network with the second data processing unit using the name in order to carry out processing involving shared access to the resource.

Thus, with the present invention, a high degree of flexibility is provided concerning the names which are used to designate shared resources in a computer network. There is no need to use a predefined set of global names defined by a central authority as in the prior art. Instead, private agreements can be made between any two or more data processing units connected to the network to use certain specified names to represent certain specified resources. The agreed upon names also can be in any structural format and thus are not limited to being in a format as specified by a central authority as in the prior art.

The invention will be better understood by reference to the following description of preferred embodiments which are described in conjunction with the following drawing figures:
Figure 1 is a block diagram which shows a group of data processing units connected to each other via a network, in the context of which the preferred embodiment of the present invention will be described; and
Figure 2 shows the block diagram of Fig. 1 modified to illustrate an example of how the preferred embodiment of the present invention is used in practice.

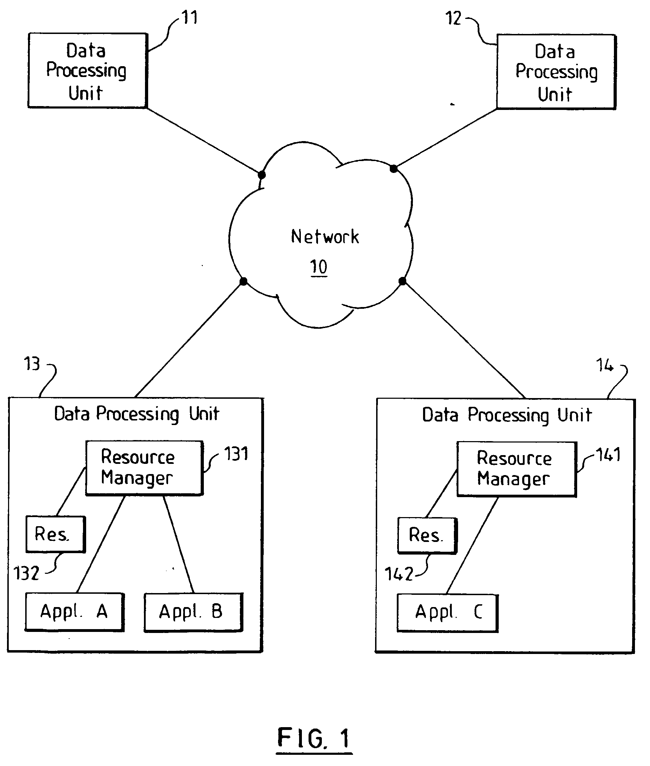

A group of data processing units 11-14 are interconnected via a network 10 to which each data processing unit is connected, as shown in Fig. 1. This network 10 can be any type of network (e.g., Ethernet, token ring) or it could be a collection of networks (which is what the Internet is). Data processing units 13 and 14 are shown in more detail for illustrative purposes.

Data processing unit 13 has a resource manager 131 which is a software component which manages the resources which the data processing unit 13 uses. For example, application A and application B, which are software components connected to resource manager 131, can make requests for access to a resource 142 held in another data processing unit 14 and it is the job of the resource manager 131 to contact the data processing unit 14 and send the requests thereto. The resource manager 141 of the data processing unit 14 would then talk to the resource manager 131 of the data processing unit 13 in order to coordinate the requests for access to the resources held by the data processing unit 14. Data processing unit 13 can also have its own resources (e.g., 132).

As stated above, the prior art techniques have required that the resource managers adhere to a strict global naming structure (e.g., the DNS's structure), so in effect, each resource manager is forced to participate in using this set of global names which applies throughout the network and does not allow duplicate names to be used when two different groups of resource managers are talking to each other. The preferred embodiment of the present invention allows each individual resource manager to agree with any other resource manager that they will share a certain set of resource names. The resource managers which reach such agreement then use the names in the set of resource names when talking to each other. This eliminates the need for each resource manager to only use names which adhere to a predefined structural format (such as www.name1.name2). Instead, two resource managers can agree to simply use the name "savings account balance" to identify a particular resource held by one of the data processing units which contain the agreeing resource managers.

Of course, two other resource managers could also agree to use the name "savings account balance" to identify a different resource and this is one of the important advantages of the present invention. For example, a popular name like "help" to identify a help file (which includes instructions on how to carry out particular tasks) can be repeated throughout the network by having different groups (or clusters) of resource managers agree that when the name "help" is used it will refer to a particular resource held by one of the agreeing resource manager's data processing unit.

Specifically, resource manager 131 defines a group of resource names for use by application A and application B without reference to any outside authority to allocate or police use of the names. Resource manager 141 defines a group of resource names for use by application C without reference to any outside authority to allocate or police use of the names. Of course, if we were to stop here, it would not be possible for data processing units 13 and 14 to share resources since neither unit would be able to recognize resources that are held by the other unit. Thus, in defining the group of resource names for use by local applications, the resource managers 131 and 141 decide to agree that certain names (or groups of names) will be shared between the two units 13 and 14 (i.e., exclusively of other units 11 and 12). Thus, when application A uses one of the agreed names for a resource held by unit 14, the resource manager 131 determines that the resource is held by unit 14 and sends the request over the network 10 to unit 14 whose resource manager 141 then coordinates access to the resource (e.g., a database record or file) for this request.

Thus, any number of sets of resource managers can use any number of sets of names. Name clashes may exist within a set of names and it is up to the resource managers themselves to avoid such clashes.

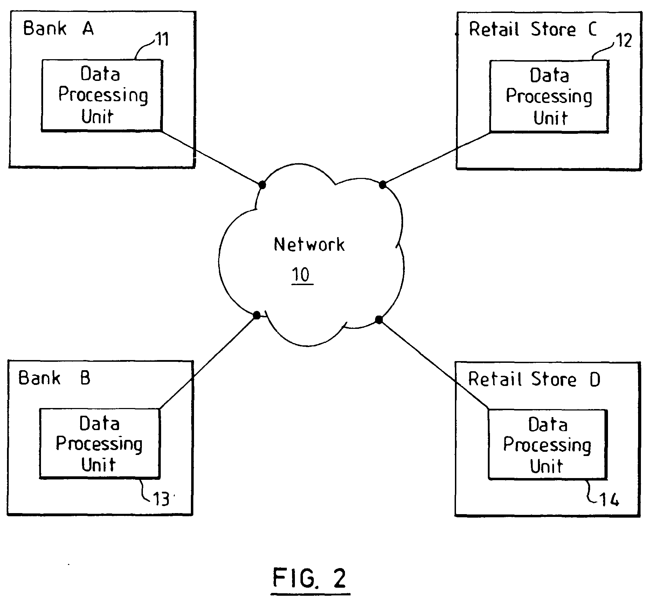

As an example of the advantageous use of this invention, assume that data processing units 11 and 13 are operated by respective financial institutions A and B (such as banks) and that data processing units 12 and 14 are operated by respective retail stores C and D (see Fig. 2). Units 11 and 12 do business with each other and units 13 and 14 do business with each other (i.e., retail store C has its accounts with bank A and retail store D has its accounts with bank B). According to the preferred embodiment of the invention, data processing units 11 and 12 agree that the names "stock_orders", "stock_inquiry" and "account_inquiry" will be used in doing business amongst units 11 and 12. Also, data processing units 13 and 14 can also agree that the very same names will be used in doing business amongst units 13 and 14. In the prior art, since all of the four units are on the same network (or group of inter-connected networks), unique names would have to be used. With the invention, the same names can be used amongst different sets of processing units.

The agreement between units 11 and 12 would preferably involve, for example, unit 11 sending a message to unit 12 explaining that unit 11 would like to use the name "account-inquiry" to identify a specific resource in future communications between units 11 and 12. Unit 12 would then store this name and a designation of the resource the name identifies along with the fact that it was unit 11 that has requested that the name be used in communications between units 11 and 12. Then, in the future, when unit 12 receives a message relating to the name "account-inquiry" from unit 11, unit 12 will recognize the name and the corresponding resource and can accordingly process the request from unit 11.

An example use of the preferred embodiment of the present invention will now be described in the context of a well-known messaging and queuing software system, which is the environment in which the present invention was developed. We consider how this is applied to Queue Managers, managing Queue resources. In general any resource domains might be involved, describing any type of resource. We will also compare this scheme to the conventional hierarchical scheme used by the Internet Domain Name Service to manage internet addresses (ie. its resources).
- A queue manager has a name, and it hosts a number of named queues.
- A number (always more than one) of queue managers agree to form a set of queue managers which we call a cluster.
- The cluster of queue managers has a name, each queue manager may belong to only one cluster of a particular cluster name, although it may belong to multiple clusters with different names.
- The queue managers each do this by advertising network address and cluster name pairs.
- Each queue that each queue manager hosts belongs to zero or more of the clusters that the queue manager belongs to.
- This is done by advertising a number of queue name and cluster name pairs.

This allows each queue manager to choose autonomously which names (of queues) it exposes to its applications, by either attaching to or not attaching to a given cluster. The queue manager must ensure that the naming conventions used within a cluster that it joins not allow name clashes to occur when the superset of queue names is exposed to its applications. Or it must at least ensure that the consequences of a clash are acceptable.

Organisations use resource managers in a multitude of ways that suit them, they require autonomy of the names they use when they do this. They also need to share resources with other autonomous organisations and consequently need to share the names of their resources. This scheme allows this sharing to take place in an arbitrary but controlled way.

### Example of two banks and two stores

Consider a queue managers and queues as follows
bank1 with queues accounts-inquiry, accounts-credits
bank2 with queues accounts-inquiry, acc-credits
store1 with queues stock-inquiry, orders
store2 with queues stock-inquiry, stock-orders
A cluster is formed of bank1, store1 and an application can then use the names accounts-inquiry and stock-inquiry which are unique within the cluster.

We see that in contrast with this invention, the resource managers of the prior art DNS software architecture must use names conforming to the naming authority's standards and may only allocate names in the space that has been delegated to them. With the present invention, a much higher degree of flexibility is given to the resource managers.

## Claims

1. A first data processing apparatus in communication with a second data processing apparatus via a network such that the first data processing apparatus can access a resource held by the second data processing apparatus, the first data processing apparatus comprising:
a resource; and
a resource manager;
wherein the resource manager agrees with a resource manager of the second data processing apparatus to use either (1) a first name for identifying the resource of the first data processing apparatus or (2) a second name for identifying the resource of the second data processing apparatus, and
wherein the resource managers communicate with each other over the network in order to establish agreement that a particular name will be used as the first name or the second name in future correspondence to represent a particular resource.

2. The apparatus of claim 1 wherein the resource is a queue and the resource manager is a queue manager.

3. The apparatus of any preceding claim wherein the resource is a file and the first name or second name is a filename.

4. The apparatus of any preceding claim wherein the network is the Internet.

5. The apparatus of any preceding claim wherein the resource managers communicate with each other over the network in order to establish agreement as to a group of names which will be used in future correspondence to represent a group of resources.

6. A computer-based network of data processing units configured in such a way that one data processing unit can access a resource held on another data processing unit, the network comprising:
a first data processing unit; and
a second data processing unit;
wherein the first data processing unit agrees with the second data processing unit to use either (1) a first name for identifying a resource of the first data processing unit or (2) a second name for identifying a resource of the second data processing unit, and
wherein the first data processing unit communicates with the second data processing unit in order to establish agreement as to a particular name which will be used as the first name or the second name in future correspondence to represent a particular resource.

7. The network of claim 6 wherein the network is the Internet.

8. The network of claim 6 wherein the data processing units communicate with each other over the network in order to establish agreement as to a group of names which will be used in future correspondence to represent a group of resources.

9. A method of communicating amongst a plurality of data processing units via a network in such a way that one data processing unit can access a resource held on another data processing unit, the method comprising steps of:
(a) a first data processing unit communicates over the network with a second data processing unit to offer a potential agreement as to a name which will be used to identify a resource;
(b) the second data processing unit accepts the agreement to use the name to identify the resource; and
(c) the first data processing unit communicates over the network with the second data processing unit using the name in order to carry out processing involving shared access to the resource.

10. The method of claim 9 wherein the step (c) involves the first data processing unit making a request for access to the resource which is held on the second data processing unit, using the name of the resource which has been previously agreed upon in the steps (a) and (b).

11. The method of claim 9 wherein the step (c) involves the second data processing unit making a request for access to the resource which is held by the first data processing unit, using the name of the resource which has been previously agreed upon in the steps (a) and (b).

12. The method of claim 9 wherein the resource is a queue.

13. The method of claim 9 wherein the resource is a file and the name is a filename.

14. The method of claim 9 wherein the network is the Internet.

15. The method of claim 9 wherein the potential agreement in step (a) pertains to a group of names which will be used to identify a corresponding group of resources.

16. A computer program product stored on a computer readable storage medium for, when executed on a computer, carrying out a method of communicating amongst a plurality of data processing units via a network in such a way that one data processing unit can access a resource held on another data processing unit, the method comprising steps of:
(a) a first data processing unit communicates over the network with a second data processing unit to offer a potential agreement as to a name which will be used to identify a resource;
(b) the second data processing unit accepts the agreement to use the name to identify the resource; and
(c) the first data processing unit communicates over the network with the second data processing unit using the name in order to carry out processing involving shared access to the resource.

17. The computer program product of claim 16 wherein the network is the Internet.
